(19) Europäisches Patentamt
European Patent Office
Office européen des brevets

(11) **EP 4 350 058 A1**

(12) **EUROPEAN PATENT APPLICATION**
published in accordance with Art. 153(4) EPC

(43) Date of publication:
**10.04.2024 Bulletin 2024/15**

(21) Application number: **22816211.1**

(22) Date of filing: **02.06.2022**

(51) International Patent Classification (IPC):
**D01F 9/14** $^{(2006.01)}$    **D01F 9/145** $^{(2006.01)}$

(52) Cooperative Patent Classification (CPC):
**D01F 9/14; D01F 9/145**

(86) International application number:
**PCT/JP2022/022551**

(87) International publication number:
**WO 2022/255466 (08.12.2022 Gazette 2022/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.06.2021 JP 2021093111**

(71) Applicants:
• **NIPPON STEEL CORPORATION**
  **Chiyoda-ku**
  **Tokyo 100-8071 (JP)**
• **NIPPON STEEL Chemical & Material Co., Ltd.**
  **Tokyo 103-0027 (JP)**
• **Nippon Graphite Fiber Corporation**
  **Himeji Hyogo 671-1123 (JP)**

(72) Inventors:
• **NAKAI, Masako**
  **Tokyo 100-8071 (JP)**
• **USUI, Masafumi**
  **Tokyo 100-8071 (JP)**
• **NEGI, Noriyuki**
  **Tokyo 100-8071 (JP)**
• **ARAI, Yutaka**
  **Tokyo 103-0027 (JP)**
• **TAKAMATSU, Tomoaki**
  **Himeji-shi, Hyogo 671-1123 (JP)**

(74) Representative: **Vossius & Partner**
**Patentanwälte Rechtsanwälte mbB**
**Siebertstrasse 3**
**81675 München (DE)**

(54) **PITCH-BASED CARBON FIBER, METHOD FOR PRODUCING SAME, AND FIBER-REINFORCED PLASTIC**

(57)    Provided are: a pitch-based carbon fiber having a defect number density of 40/m or less, a shape of a cross-section of the pitch-based carbon fiber perpendicular to a longitudinal direction being a circle or an ellipse having oblateness of 0.25 or less, and the pitch-based carbon fiber having a boundary surface in a diametrical direction of the circular cross-section or in a major axis direction of the elliptical cross-section; a method of producing the pitch-based carbon fiber; and a fiber-reinforced plastic.

FIG.2

EP 4 350 058 A1

**Description**

BACKGROUND

Technical Field

The present disclosure relates to a pitch-based carbon fiber, a method of producing the pitch-based carbon fiber, and a fiber-reinforced plastic.

Background Art

A pitch-based carbon fiber is widely used in various use applications such as a fiber-reinforced plastic. The pitch-based carbon fiber is disclosed in, for example, Patent Literatures 1, 2, and 3, and the like.
Patent Literature 1: Japanese Patent Application Laid-Open (JP-A) No. S60-155714
Patent Literature 2: JP-A No. S61-006316
Patent Literature 3: Japanese Patent Publication (JP-B) No. H5-29689

SUMMARY

Technical Problem

Techniques related to pitch-based carbon fibers have been conventionally studied, including Patent Literature 1 and the like. However, at present, a technique for improving the tensile strength of the pitch-based carbon fiber is not sufficient. In Patent Literatures 2 and 3, there is room for improvement in terms of improving the tensile strength while maintaining a high tensile modulus of elasticity. The tensile modulus of elasticity generally improves as the heat treatment temperature (graphitization temperature) during graphitization increases, but there is a demand for a production method that generates a higher tensile modulus of elasticity at the same graphitization temperature.
The disclosure has been made in view of such circumstances, and an object of an embodiment of the disclosure is to provide a method of producing a pitch-based carbon fiber with which a pitch-based carbon fiber excellent in tensile strength can be obtained.
An object of another embodiment of the disclosure is to provide a pitch-based carbon fiber excellent in tensile strength.
An object of still another embodiment of the disclosure is to provide a fiber-reinforced plastic using the pitch-based carbon fiber.

Solution to Problem

The disclosure includes the following aspects.

<1> A pitch-based carbon fiber having a defect number density of 40/m or less, a shape of a cross-section of the pitch-based carbon fiber perpendicular to a longitudinal direction being a circle or an ellipse having oblateness of 0.25 or less, and the pitch-based carbon fiber having a boundary surface in a diametrical direction of the circular cross-section or in a major axis direction of the elliptical cross-section.
<2> The pitch-based carbon fiber according to <1>, wherein a ratio of an area of a region occupied by a graphene sheet oriented at an orientation angle of from 60° to 120° with respect to the boundary surface is 60% or more with respect to an area of the cross-section.
<3> The pitch-based carbon fiber according to <2>, wherein the shape of the cross-section is a circle or an ellipse having oblateness of 0.2 or less.
<4> The pitch-based carbon fiber according to any one of <1> to <3>, wherein the defect number density is 30/m or less.
<5> The pitch-based carbon fiber according to any one of <1> to <4>, having a tensile modulus of elasticity is 400 GPa or more.
<6> The pitch-based carbon fiber according to <5>, wherein the tensile modulus of elasticity is 440 GPa or more.
<7> A method of producing a pitch-based carbon fiber, the method including a melt-spinning process of discharging melted anisotropic pitch from a spinning nozzle to perform spinning,

wherein a ratio of a length of a long side of a circumscribing rectangle circumscribing a shape of a discharge hole of the spinning nozzle with respect to a length of a short side of the circumscribing rectangle is more than 1, and

a viscosity of the melted anisotropic pitch is from 20 Pa·s to 80 Pa·s.

<8> The method of producing a pitch-based carbon fiber according to <7>, wherein the ratio is from 1.5 to 10.0.

<9> The method of producing a pitch-based carbon fiber according to <7> or <8>, wherein the shape of the discharge hole is a rectangle or an ellipse.

<10> The method of producing a pitch-based carbon fiber according to any one of <7> to <9>, wherein a viscosity of the anisotropic pitch is from 30 Pa·s to 60 Pa·s.

<11> The method of producing a pitch-based carbon fiber according to any one of <7> to <10>, wherein a spinning speed in the melt-spinning process is from 200 m/min to 500 m/min.

<12> The method of producing a pitch-based carbon fiber according to any one of <7> to <11>, further including a graphitization process of subjecting a carbonized pitch-based carbon fiber precursor to a heat treatment to graphitize the carbonized pitch-based carbon fiber precursor, after the melt-spinning process,

wherein a temperature of the heat treatment in the graphitization process is from 2000°C to 2900°C.

<13> A fiber-reinforced plastic, comprising the pitch-based carbon fiber according to any one of <1> to <6>.

Advantageous Effects of Invention

According to an embodiment of the disclosure, there is provided a method of producing a pitch-based carbon fiber with which a pitch-based carbon fiber excellent in tensile strength can be obtained.

According to another embodiment of the disclosure, there is provided a pitch-based carbon fiber excellent in tensile strength.

According to still another embodiment of the disclosure, there is provided a fiber-reinforced plastic using the pitch-based carbon fiber.

BRIEF DESCRIPTION OF DRAWINGS

Fig. 1 shows an example of a Weibull plot.
Fig. 2 is a schematic view showing an example of a cross-section of a pitch-based carbon fiber.
Fig. 3 is a schematic view showing an example of a cross-section of a pitch-based carbon fiber.
Fig. 4 is a schematic view showing an example of a cross-section of a pitch-based carbon fiber.
Fig. 5 is an SEM image showing an example of a cross-section of a pitch-based carbon fiber.
Fig. 6 shows an example of a binarized image of the SEM image of Fig. 5.
Fig. 7 shows an example of an edited image of the binarized image of Fig. 6.
Fig. 8 is a view showing an example of an orientation angle of a graphene sheet.
Fig. 9 is a schematic view showing an example of a cross-section of a spinning nozzle.
Fig. 10 is a schematic view showing an example of a discharge hole of the spinning nozzle.

DESCRIPTION OF EMBODIMENTS

Hereinafter, details of a pitch-based carbon fiber and a method of producing the pitch-based carbon fiber according to the disclosure will be described.

In the disclosure, a numerical range that has been indicated by use of "to" indicates the range that includes the numerical values which are described before and after "to", as a minimum value and a maximum value, respectively.

In a numerical range described in a stepwise manner in the disclosure, an upper limit value or a lower limit value described in one numerical range may be replaced with an upper limit value or a lower limit value described in another numerical range described in a stepwise manner. In a numerical range described in the disclosure, an upper limit value or a lower limit value described in one numerical range may be replaced with a value shown in Examples.

In the disclosure, a combination of two or more preferred aspects is a more preferred aspect.

In a case in which a plurality of substances corresponding to each component are present, the content of each component in the disclosure means the total content of the plurality of substances unless otherwise specified.

In the disclosure, the term "process" includes not only an independent process but also a process by which an intended action of the process is achieved, though the process cannot be clearly distinguished from other processes.

The drawings referred to in the following description are illustrative and schematically illustrated, and the disclosure is not limited to these drawings. The same reference numerals denote the same components. Reference numerals in the drawings may be omitted.

<Pitch-Based Carbon Fiber>

A pitch-based carbon fiber according to the disclosure has a defect number density of 40/m or less, a shape of a cross-section of the pitch-based carbon fiber perpendicular to a longitudinal direction is a circle or an ellipse having oblateness of 0.25 or less, and the pitch-based carbon fiber has a boundary surface in a diametrical direction of the circular cross-section or in a major axis direction of the elliptical cross-section.

The defect number density is the number of defects included per unit length of the pitch-based carbon fiber, and means, in the disclosure, a value obtained based on a Weibull plot. By reducing the defect number density, the tensile strength of the pitch-based carbon fiber can be improved.

The defect number density is related to, for example, the number of voids and cracks (hereinafter, referred to as "voids and the like"), which are factors affecting the tensile strength, and the size or the like of voids and the like. Therefore, for example, by reducing the number of voids and the like, reducing the size of voids and the like, the defect number density can be reduced so that the tensile strength can be improved.

Hereinafter, a method of obtaining the defect number density base on the Weibull plot will be specifically described.

A defect number density $\lambda$ [number/m] of a pitch-based carbon fiber having a length L [m] is represented by the following Formula (1).

[Mathematical Formula 1]

$$\lambda = \frac{1}{L_0}\left[\frac{\sigma}{\gamma}\right]^{\beta} \quad \cdots \quad (1)$$

In Formula (1), $\sigma$, $\beta$, $\gamma$, and $L_0$ are as follows.

$\sigma$: tensile strength [GPa] per single fiber of pitch-based carbon fiber (N single fibers)
$\beta$: width of probability distribution of tensile strength per single fiber in pitch-based carbon fiber (N single fibers)
(Shape Parameter (Weibull Modulus))
$\gamma$: tensile strength per unit length of pitch-based carbon fiber obtained from probability distribution of tensile strength per single fiber
(Scaling Parameter)
$L_0$: reference length (1 m) of pitch-based carbon fiber

A breaking probability F(L) (hereinafter, referred to as "breaking probability F") in which the pitch-based carbon fiber is broken at the tensile strength $\sigma$ is represented by the following Formula (2).

$$F(L) = 1 - \exp(-\lambda L) \qquad (2)$$

Formula (2) is based on a model (weakest link model) in which the weakest ring is broken in the case of pulling a chain so that the entire chain is broken.

In a case in which Formula (1) is substituted into Formula (2), the following Formula (3) is obtained.

[Mathematical Formula 2]

$$F = 1 - \exp\left(-\frac{L}{L_0}\left[\frac{\sigma}{\gamma}\right]^{\beta}\right) \quad \cdots \quad (3)$$

In a case in which Formula (3) is developed, the following Formula (4) is obtained.

[Mathematical Formula 3]

$$\ln\left[-\ln(1-F)\right] = \beta\ln\sigma + \left[-\beta\ln\gamma + \ln\left(\frac{L}{L_0}\right)\right] \quad \cdots \ (4)$$

Formula (4) is a linear function of ln[-ln(1-F)] and lnσ, and provides a Weibull plot.

Hereinafter, a method of experimentally determining the breaking probability F and the tensile strength σ per single fiber will be described.

N pitch-based carbon fibers are subjected to a tensile test in accordance with JIS R 7606:2000 to obtain N tensile strengths. For a certain tensile strength σ among the N tensile strengths, in a case in which the number of pitch-based carbon fibers broken at the tensile strength σ or less is n, the breaking probability F at the tensile strength σ (that is, the ratio of the pitch-based carbon fibers having a tensile strength of σ or less) is represented by the following Formula (5).

$$F = n/N \quad \cdots \ (5)$$

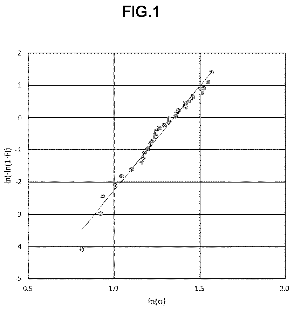

The tensile strength σ and the breaking probability F at the tensile strength σ are substituted into Formula (4), and ln[-ln(1-F)] and lnσ are plotted. Also for other tensile strengths, the breaking probability is similarly determined and plotted in the same manner. As a result, N plots can be obtained. N is 30 or more. As a result, for example, the Weibull plot shown in Fig. 1 is obtained.

Formula (4) is fitted to the Weibull plot by a least squares method to obtain a fitting line. For example, a fitting line as shown in Fig. 1 is obtained.

β and γ are obtained from values of the slope and intercept of the fitting line. An average value ($\sigma_{av}$) of the tensile strength is determined from the results of the tensile test. In Formula (1), $\sigma_{av}$ is substituted as σ and β and γ are substituted into Formula (1) to obtain the defect number density λ. The defect number density λ thus obtained is an average value $\lambda_{av}$ of the defect number density, which is the defect number density of the pitch-based carbon fiber shown in the present application.

As described above, the defect number density of the pitch-based carbon fiber can be obtained based on the Weibull plot.

The number N of the pitch-based carbon fibers used in the tensile test is preferably 30 or more. The upper limit of the number N is not particularly limited, but may be, for example, 50.

The length of the pitch-based carbon fiber used in the tensile test is set to 25 mm.

In the pitch-based carbon fiber, the tensile strength tends to be improved as the defect number density is smaller, and thus a smaller defect number density is preferable. The defect number density is, for example, preferably 30/m or less, more preferably 25/m or less, and still more preferably 10/m or less. The lower limit of the defect number density is not particularly limited, but is usually about 1/m.

The shape of a cross-section of the pitch-based carbon fiber perpendicular to a longitudinal direction (hereinafter, simply referred to as "cross-section") is a circle or an ellipse having oblateness of 0.25 or less. This makes it easy to reduce the defect number density. The "vertical" means 90° ± 15°.

The oblateness is a value obtained by subtracting a ratio of a length of a short side of a circumscribing rectangle circumscribing a shape of the elliptical shape of the cross-section with respect to a length of a long side of the circumscribing rectangle from 1. The circumscribing rectangle is a rectangle circumscribing an elliptical shape and having the smallest area.

The diameter of the pitch-based carbon fiber is not particularly limited, and may be, for example, from 5 μm to 20 μm.

The shape of the cross-section, oblateness, and diameter of the pitch-based carbon fiber are obtained in accordance with JIS R 7606:2000 using a laser shape measurement apparatus by rotating the cross-section of the pitch-based carbon fiber every 10° in a measurement range of from 0° to 180° and measuring the shape of the outer periphery of the cross-section. The laser shape measurement apparatus may be a commercially available product, and examples thereof include "Laser Scan Micrometer LSM-500S" manufactured by Mitutoyo Corporation.

In a case in which the cross-section was an ellipse, a major axis and a minor axis were determined from the shape of the outer periphery of the cross section, and an equivalent circle diameter (square root of the product of the major axis and the minor axis) calculated from the area of the ellipse was taken as the diameter of the pitch-based carbon fiber.

From the viewpoint of more easily reducing the defect number density, the shape of the cross-section perpendicular to the longitudinal direction is preferably a circle or an ellipse having oblateness of 0.2 or less, more preferably

**EP 4 350 058 A1**

a circle or an ellipse having oblateness of 0.18 or less, and still more preferably a circle or an ellipse having oblateness of 0.15 or less. The lower limit of the oblateness in a case in which the shape is an ellipse is not particularly limited, but is preferably 0.01 or more from the viewpoint of more easily reducing the defect number density.

The pitch-based carbon fiber includes a graphene sheet. The graphene sheet is a sheet-like material having a lattice structure in which carbon atoms are bonded in a hexagonal shape on a plane.

The structure of the pitch-based carbon fiber varies depending on the state (for example, orientation) of the graphene sheet, and examples thereof include a radial structure, an onion structure, and a random structure, but a radial structure is preferable.

In the radial structure, a plurality of graphene sheets extend in the longitudinal direction of the pitch-based carbon fiber, and in the cross-section, the plurality of graphene sheets extend from predetermined positions toward the outer peripheral direction of the cross-section.

The graphene sheet may be in contact with the predetermined position or may be separated from the predetermined position. The graphene sheet may be in contact with the outer periphery of the cross section or may be separated from the outer periphery of the cross-section.

The graphene sheets may be in contact with each other via the predetermined positions, or are not necessarily in contact with each other.

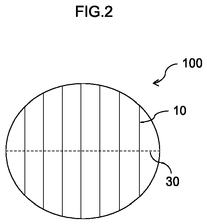

For example, as shown in Fig. 2, the shape of a cross-section of a pitch-based carbon fiber 100 is an ellipse, and a plurality of graphene sheets 10 extend from a boundary surface 30 (the predetermined position) in a major axis direction of the ellipse toward the outer peripheral direction of the cross-section. As described above, the graphene sheet 10 is oriented with respect to the boundary surface 30 in the major axis direction of the cross-section. Such a structure of the pitch-based carbon fiber may be referred to as "flat radial structure".

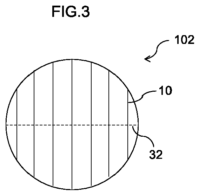

In another embodiment, for example, as shown in Fig. 3, the shape of a cross-section of a pitch-based carbon fiber 102 is a circle, and a plurality of graphene sheets 10 extend from a boundary surface 32 (the predetermined position) in a diametrical direction of the circle toward the outer peripheral direction of the cross-section. As described above, the graphene sheet 10 is oriented with respect to the boundary surface 32 in the diametrical direction of the cross-section.

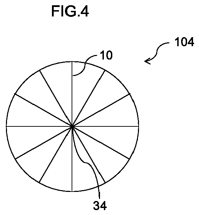

In still another embodiment, for example, as shown in Fig. 4, the shape of a cross-section of a pitch-based carbon fiber 104 is a circle, and a plurality of graphene sheets 10 extend radially from a center 34 (the predetermined position) of the circle toward the outer peripheral direction of the cross-section. Such a structure of the pitch-based carbon fiber may be referred to as "simple radial structure".

As described above, the pitch-based carbon fiber shown in Fig. 3 and the pitch-based carbon fiber shown in Fig. 4 have the same circular cross-sectional shape, but have a difference in the extension mode of the graphene sheet in the cross-section.

From the viewpoint of more easily reducing the defect number density, in the pitch-based carbon fiber, the graphene sheet is preferably oriented with respect to the boundary surface in a diametrical or major axis direction of the cross-section.

In the pitch-based carbon fiber, a ratio of an area of a region occupied by a graphene sheet oriented at an orientation angle of from 60° to 120° (hereinafter, referred to as "specific region") with respect to the boundary surface in the diametrical or major axis direction of the cross-section is preferably 60% or more with respect to an area of the cross-section. This makes it easier to reduce the defect number density.

A ratio of an area of the specific region is obtained as follows.

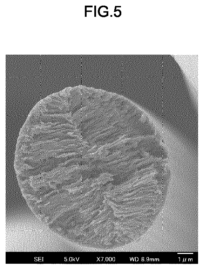

A randomly selected cross-section of the pitch-based carbon fiber is observed in a direction perpendicular to the cross-section using an SEM (Scanning Electron Microscope) to acquire an SEM image. As a result, for example, an SEM image of the cross-section of the pitch-based carbon fiber as shown in Fig. 5 is obtained. As the SEM, for example, "JSM-6500F" manufactured by JEOL Ltd. can be used. As acquisition conditions of the SEM image, the magnification may be a magnification at which only a cross-section of a single fiber can be acquired (for example, from 7000 times to 10000 times, in the case of a pitch-based carbon fiber having a diameter of about 7 $\mu$m, 10000 times), and the acceleration voltage is not particularly specified, and may be, for example, from 5 kV to 15 kV.

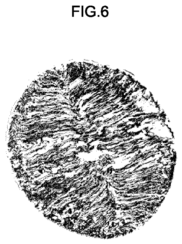

The SEM image is analyzed using image processing software "ImageJ (vl. 52)". Specifically, the SEM image is subjected to binarization processing to acquire a binarized image of the cross-section. As a result, for example, a binarized image as shown in Fig. 6 is obtained.

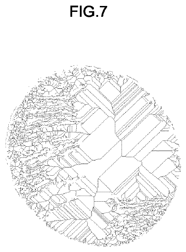

The binarized image is subjected to editing of drawing a black portion of the binarized image as a line segment using "ImageJ (vl. 52)" to acquire an edited image of the cross-section. As a result, for example, an edited image as shown in Fig. 7 is obtained.

For the edited image, linearity of each line segment in the cross-section is evaluated by fractal dimension analysis, and a line segment of D = 1.2 or less is specified. The line segment of D = 1.2 or less is defined as a "graphene sheet". "ImageJ (vl. 52)" is image processing software of the public domain in an open source.

A line segment that gives the maximum length of the contour of the cross-section in the edited image (that is, the maximum value of a straight line connecting any two points of the contour, which is the diameter in a case in which

6

the cross-section is a circle, and the major axis in a case in which the cross-section is an ellipse) is defined as a "boundary surface".

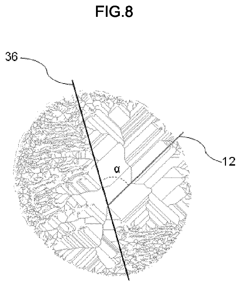

The edited image is analyzed by the program described in "Python (v3)" (open source) to determine an orientation angle of each graphene sheet (line segment of D = 1.2 or less) with respect to the boundary surface over the entire cross-section. At this time, an angle at an intersection of a straight line including the boundary surface and a straight line including the graphene sheet is defined as an orientation angle. For example, as shown in Fig. 8, an orientation angle $\alpha$ is obtained from an angle at an intersection of a straight line 36 including the boundary surface and a straight line 12 including the graphene sheet. For example, in the cross-section shown in Fig. 8, regions with many short graphene sheets (upper left and lower right regions in Fig. 8) are included, but the orientation angle is evaluated over the entire cross-section regardless of the length of the graphene sheet.

The region (specific region) occupied by the graphene sheet oriented at an orientation angle of from 60° to 120° (a line segment having D = 1.2 or less and an orientation angle of from 0° to 120°) is indicated in black using "ImageJ (vl. 52)" to identify the specific region occupied in the cross-section. The area of the specific region and the area of the cross-section are determined using "ImageJ (vl. 52)". The ratio of the area of the specific region is determined by dividing the area of the specific region by the area of the cross-section.

For the same cross-section of the pitch-based carbon fiber as described above, the same measurement is performed five times, and the average value of the ratios of the areas of the specific regions obtained in the five measurements is taken as the ratio of the area of the specific region of the pitch-based carbon fiber.

From the viewpoint of more easily reducing the defect number density, the graphene sheet oriented at an orientation angle of from 60° to 120° more preferably has an average orientation angle of from 70° to 110°.

From the viewpoint of more easily reducing the defect number density, the ratio of the area of the specific region is more preferably 70% or more. The upper limit of the ratio of the area of the specific region is not particularly limited, but is preferably 95% or less from the viewpoint of more easily reducing the defect number density.

The tensile strength of the pitch-based carbon fiber is preferably as high as possible, and is, for example, preferably 3600 MPa or more, more preferably 3800 MPa or more, and still more preferably 4000 MPa or more.

The tensile strength of the pitch-based carbon fiber is measured in accordance with JIS R 7606:2000. An average value of the N tensile strengths obtained in the tensile test described above for the Weibull plot is taken as the tensile strength of the pitch-based carbon fiber.

From the viewpoint of further enhancing mechanical properties, the tensile modulus of elasticity of the pitch-based carbon fiber is preferably as high as possible, and is, for example, preferably 400 GPa or more, more preferably 440 GPa or more, and still more preferably 460 GPa or more.

The tensile modulus of elasticity of the pitch-based carbon fiber is measured in accordance with JIS R 7606:2000. The tensile modulus of elasticity is also measured in the tensile test described above for the Weibull plot, and an average value of N tensile moduli of elasticity obtained from the N pitch-based carbon fibers is taken as the tensile modulus of elasticity of the pitch-based carbon fiber.

<Method of Producing Pitch-Based Carbon Fiber>

A method of producing a pitch-based carbon fiber according to the disclosure is not particularly limited, but the method of producing a pitch-based carbon fiber according to the disclosure described below can be suitably used.

The method of producing a pitch-based carbon fiber according to the disclosure includes a melt-spinning process of discharging melted anisotropic pitch from a spinning nozzle to perform spinning,

in which a ratio of a length of a long side of a circumscribing rectangle circumscribing a shape of a discharge hole of the spinning nozzle with respect to a length of a short side of the circumscribing rectangle is more than 1, and a viscosity of the melted anisotropic pitch is from 20 Pa·s to 80 Pa·s.

The method of producing a pitch-based carbon fiber includes an infusibilization process, a carbonization process, and a graphitization process described below in addition to the melt-spinning process. Hereinafter, each process will be described in detail.

[Melt-Spinning Process]

In the melt-spinning process, a melted anisotropic pitch is discharged from a spinning nozzle to perform spinning.

(Anisotropic Pitch)

The anisotropic pitch includes a mesophase in which molecules of pitch are arranged in a planar manner. The mesophase becomes a graphene sheet through the graphitization process, and is a precursor of the graphene sheet.

Examples of the raw material for the anisotropic pitch include coal-based heavy oils such as coal tar, coal tar pitch, and a coal liquefied product, and further include atmospheric distillation residual oil and vacuum distillation residual oil of petroleum, and products obtained by refining petroleum-based heavy oils such as tar and pitch produced as by-products by a heat treatment of these atmospheric distillation residual oil and vacuum distillation residual oil. By subjecting such a raw material to a treatment in which a heat treatment, a solvent extraction treatment, a hydrogenation treatment, and the like are appropriately combined, anisotropic pitch is obtained.

The ratio of the mesophase in the anisotropic pitch is preferably 60% or more and more preferably 70% or more. This makes it easier to exhibit the physical properties, particularly the tensile modulus of elasticity, of the pitch-based carbon fiber.

The ratio of the mesophase is measured as follows.

A sample is randomly taken out from the anisotropic pitch, and the sample is observed at a magnification of from 10 to 100 times using a polarizing microscope. For a randomly selected field of view, the area of the entire field of view and the area of the mesophase are measured. The ratio of the area of the mesophase with respect to the area of the entire field of view is taken as the ratio of the mesophase. That is, the ratio of the mesophase is the area ratio of the mesophase with respect to the anisotropic pitch.

The melting point of the anisotropic pitch is not particularly limited, but is preferably from 260°C to 320°C and more preferably from 270°C to 310°C.

From the viewpoint of reducing foreign matters in the anisotropic pitch and more easily enhancing the tensile strength, the quinoline insoluble component in the anisotropic pitch is preferably 20% by mass or less. The quinoline insoluble component can be measured by a known method.


(Spinning Nozzle)

In the spinning nozzle that discharges the anisotropic pitch, a ratio of a length of a long side of a circumscribing rectangle circumscribing the shape of the discharge hole with respect to a length of a short side of the circumscribing rectangle circumscribing the shape of the discharge hole (hereinafter, referred to as "aspect ratio") is more than 1. The circumscribing rectangle is a rectangle circumscribing the elliptical shape of the discharge hole and having the smallest area.

The shape of the discharge hole is not limited to an ellipse, and may be a rectangle. In a case in which the shape of the discharge hole is a rectangle, a ratio of a length of a long side with respect to a length of a short side in the rectangle (hereinafter, referred to as "aspect ratio") is more than 1.

Since the aspect ratio of the discharge hole is more than 1, the anisotropy of the shape of the discharge hole is large as compared with a case in which the aspect ratio is 1.

In a case in which the melted anisotropic pitch passes through the discharge hole of the spinning nozzle, the mesophase in the anisotropic pitch is oriented, but the mode of orientation varies depending on the shape of the discharge hole.

In a case in which the shape of the discharge hole is a circle (aspect ratio: 1), in a strand body obtained by discharging the anisotropic pitch (hereinafter, referred to as "pitch-based carbon fiber precursor"), the mesophase is radially oriented from the center of the cross-section toward the outer peripheral portion thereof, for example, in the same manner as the graphene sheet shown in Fig. 4. This is because the mesophase is easily uniformly oriented from the center of the cross-section since the anisotropy of the shape of the discharge hole is small.

By subjecting the pitch-based carbon fiber precursor of an aspect in which the mesophase is radially oriented from the center of the cross-section toward the outer peripheral portion thereof (hereinafter, referred to as "Aspect 1") to an infusibilization process, a carbonization process, and a graphitization process, for example, a pitch-based carbon fiber having an orientation of a graphene sheet as shown in Fig. 4 can be obtained.

On the other hand, in a case in which the aspect ratio of the discharge hole is more than 1, in a pitch-based carbon fiber precursor obtained by discharging the anisotropic pitch, the mesophase is oriented from the boundary surface of the cross-section toward the outer peripheral portion thereof, for example, in the same manner as the graphene sheet shown in Fig. 2 or 3. This is because the orientation varies depending on a portion through which the mesophase passes where the anisotropy of the shape of the discharge hole is large.

By subjecting the pitch-based carbon fiber precursor of an aspect in which the mesophase is oriented from the boundary surface of the cross-section toward the outer peripheral portion thereof (hereinafter, referred to as "Aspect 2") to an infusibilization process, a carbonization process, and a graphitization process, for example, a pitch-based carbon fiber having an orientation of a graphene sheet as shown in Fig. 2 or 4 can be obtained.

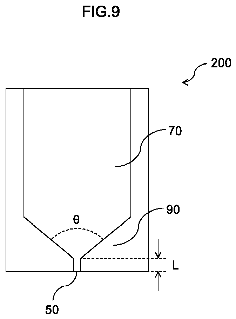

In addition to setting the aspect ratio of the discharge hole of the spinning nozzle to more than 1, the viscosity of the melted anisotropic pitch is set to from 20 Pa·s to 80 Pa·s. As a result, in a case in which the melted anisotropic pitch passes through the discharge hole of the spinning nozzle, the mesophase in the anisotropic pitch is easily oriented from the boundary surface of the cross-section toward the outer peripheral portion thereof. The viscosity described herein refers to the viscosity of the anisotropic pitch at a melting temperature (that is, the temperature at an introduction unit 70 in Fig. 9) in a region in which the melted anisotropic pitch is stored before being discharged from the spinning nozzle.

In a case in which the aspect ratio and the viscosity are satisfied, the defect number density can be easily set to 40/m or less.

In a case in which the aspect ratio and the viscosity are satisfied, it is easy to set the orientation angle of the graphene sheet with respect to the boundary surface in a range of from 60° to 120°, and it is also easy to set the ratio of the area of the specific region to 60%.

The viscosity of the melted anisotropic pitch is from 20 Pa·s to 80 Pa·s, preferably from 25 Pa·s to 70 Pa·s, and more preferably from 30 Pa·s to 60 Pa-s.

The viscosity of the anisotropic pitch is measured by the following method. A method of measuring the viscosity (320°C) will be described below by taking, as an example, a case in which the melting temperature of the anisotropic pitch is 320°C. The viscosity is measured under the conditions of a shear rate of from 4 to 60 s$^{-1}$ and a measurement temperature of 320°C by Rheomat-30 (manufactured by Contraves) using a concentric double tube and a high-temperature cell.

The melting temperature of the anisotropic pitch is, for example, preferably from 320°C to 340°C and more preferably from 323°C to 335°C. The melting temperature means the melting temperature (that is, the temperature at the introduction unit 70 in Fig. 9) of the anisotropic pitch in the region in which the melted anisotropic pitch is stored before being discharged from the spinning nozzle.

As compared with the pitch-based carbon fiber precursor of Aspect 1, the pitch-based carbon fiber precursor of Aspect 2 is less affected by thermal shrinkage during the graphitization process.

Specifically, in the case of Aspect 1, since the mesophase thermally shrinks in the circumferential direction of the cross-section, that is, thermally shrinks so that the angle between the mesophases decreases, the thermal shrinkage tends to increase in the outer peripheral portion of the cross-section. On the other hand, in the case of Aspect 2, since the mesophase thermally shrinks so that the distance between the surfaces of the mesophase becomes small, the mesophase tends to thermally shrink uniformly as a whole.

As described above, since the pitch-based carbon fiber precursor of Aspect 2 can reduce the influence of thermal shrinkage as compared with the pitch-based carbon fiber precursor of Aspect 1, the defect number density can be reduced more easily. Therefore, the pitch-based carbon fiber (for example, the pitch-based carbon fiber shown in each of Figs. 2 and 3) obtained from the pitch-based carbon fiber precursor of Aspect 2 can more easily improve the tensile strength as compared with the pitch-based carbon fiber (for example, the pitch-based carbon fiber shown in Fig. 4) obtained from the pitch-based carbon fiber precursor of Aspect 1.

The aspect ratio of the discharge hole is not particularly limited as long as it is more than 1, but is preferably from 1.5 to 10.0. In a case in which the aspect ratio is 1.5 or more, the pitch-based carbon fiber precursor of Aspect 2 can be more easily obtained. In a case in which the aspect ratio is set to 10.0 or less, the pitch-based carbon fiber precursor is more easily molded.

The aspect ratio is more preferably from 2.0 to 7.5 and still more preferably from 2.5 to 5.0. From the viewpoint of further reducing the defect number density and further increasing the tensile strength, the aspect ratio is still more preferably from 3.0 to 5.0.

The shape of the discharge hole is not particularly limited, but is preferably a rectangle or an ellipse. As a result, the fluidity of the anisotropic pitch changes, so that the pitch-based carbon fiber precursor of Aspect 2 can be more easily obtained.

In a case in which the discharge hole is a rectangle, the circumscribing rectangle circumscribing the shape of the discharge hole coincides with the discharge hole. In a case in which the discharge hole is a rectangle, a corner portion of the rectangle may have a curvature.

In a case in which the discharge hole is an ellipse, the short side of the circumscribing rectangle circumscribing the shape of the discharge hole coincides with the minor axis of the ellipse, and the long side of the circumscribing rectangle coincides with the major axis of the ellipse.

The configuration of the spinning nozzle is not particularly limited other than those described above, but will be further described below with specific examples.

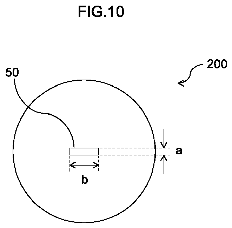

A spinning nozzle 200 shown in Fig. 9 includes a discharge hole 50 and an introduction unit for introducing melted anisotropic pitch. The shape of the discharge hole 50 is a rectangle (aspect ratio: b/a) having a short side "a" and a long side "b", as shown in Fig. 10.

The shape of a cross-section of the introduction unit 70 perpendicular to the longitudinal direction of the spinning nozzle 200 (hereinafter, referred to as "cross-section of the introduction unit") is not particularly limited, and may be, for example, a round shape, an elliptical shape, a quadrangular shape (such as a square or a rectangle), or the like.

The area of the cross-section of the introduction unit is preferably from 10 times to 2000 times the area of the discharge hole 50. In a case in which the area of the cross-section of the introduction unit is set to 10 times or more the area of the discharge hole 50, the pressure at the time of spinning does not become too high, so that fine dispersion of the anisotropic pitch can be suppressed, and a high modulus of elasticity can be more easily obtained. In a case in which the area of the cross-section of the introduction unit is set to 2000 times or less the area of the discharge hole 50, the spinnability is more easily enhanced.

The area of the cross-section of the introduction unit is more preferably from 30 times to 500 times and still more preferably from 40 times to 200 times the area of the discharge hole 50.

Since a taper angle θ of a tapered portion 90 shown in Fig. 9 affects the fluidity of the anisotropic pitch in the spinning nozzle, the taper angle θ also affects the tissue formation. Although depending on the area of the cross-section of the introduction unit, the taper angle θ is preferably from 60° to 180°. As a result, the pitch-based carbon fiber precursor of Aspect 2 can be more easily obtained. From the viewpoint of dischargeability, the taper angle θ is preferably set in the above range. The taper angle θ is more preferably from 90° to 150°.

A land length L shown in Fig. 9 preferably has a pressure loss of from 0.5 MPa to 5.0 MPa as calculated from the Hagen-Poiseuille equation. In a case in which the pressure loss is set to 0.5 MPa or more, the spinnability is more easily enhanced. In a case in which the pressure loss is set to 5.0 MPa or less, fine dispersion of the anisotropic pitch can be suppressed, and a high modulus of elasticity can be more easily obtained.

The spinning nozzle may include a rectification plate upstream of the discharge hole.

The anisotropic pitch is melted by being heated at a temperature higher than the melting point by from 10°C to 50°C, but is preferably melted at 370°C or lower. This makes it possible to more easily prevent clogging of the discharge hole due to carbonization of the anisotropic pitch.

The spinning pressure is preferably from 1.0 MPa to 3.0 MPa. In a case in which the spinning pressure is set to 1.0 MPa or more, the spinnability is more easily enhanced. In a case in which the spinning pressure is set to 3.0 MPa or less, the physical properties, particularly the tensile modulus of elasticity, of the pitch-based carbon fiber are more easily exhibited.

From the viewpoint of more easily achieving a desired diameter, the discharge rate of the anisotropic pitch is preferably from 0.03 g/min to 0.01 g/min, and the spinning speed of the pitch-based carbon fiber precursor is preferably from 200 m/min to 1000 m/min. In the cross-section of the pitch-based carbon fiber, from the viewpoint of more easily achieving the ratio of the area of the region occupied by the graphene sheet oriented at an orientation angle of from 60° to 120° with respect to the boundary surface in the diametrical direction or in the major axis direction to 60% or more with respect to the area of the cross-section, the spinning speed is more preferably from 200 m/min to 500 m/min.

[Infusibilization Process]

In the infusibilization process, the pitch-based carbon fiber precursor obtained in the melt-spinning process is subjected to a heat treatment in the presence of oxygen. This makes it possible to prevent the pitch-based carbon fiber precursor after the heat treatment from melting in the subsequent heat treatment.

Examples of the atmosphere for the heat treatment include an air atmosphere, an oxidizing gas atmosphere, and a mixed gas (for example, a mixed gas of nitrogen, oxygen, and an oxidizing gas) atmosphere, and the atmosphere for the heat treatment may be selected, if appropriate.

The temperature of the heat treatment may be, for example, from 120°C to 320°C. The heat treatment may be performed while raising the temperature in a range of from 120°C to 320°C. The temperature of the heat treatment is preferably from 150°C to 300°C.

The time for the heat treatment can be arbitrarily set in a range of from 30 minutes to 12 hours, and is preferably in a range of from 1 hour to 3 hours.

[Carbonization Process]

In the carbonization process, the pitch-based carbon fiber precursor subjected to the heat treatment in the infusibilization process is subjected to a heat treatment in an inert atmosphere to carbonize the pitch-based carbon fiber precursor.

As an inert gas, for example, nitrogen, argon, or the like can be used.

The temperature of the heat treatment may be, for example, from 400°C to 1000°C. The heat treatment may be performed while raising the temperature in a range of from 400°C to 1000°C.

The time for the heat treatment can be arbitrarily set from 5 minutes to 1 hour.

[Graphitization Process]

In the graphitization process, the pitch-based carbon fiber precursor carbonized in the carbonization process is subjected to a heat treatment in an inert atmosphere to graphitize the carbonized pitch-based carbon fiber precursor.

As an inert gas, for example, nitrogen, argon, or the like can be used.

The temperature of the heat treatment may be, for example, from 2000°C to 3200°C. The time for the heat treatment may be from 1 minute to 1 hour. In a case in which the heat treatment temperature in the graphitization process becomes too high, since the facility cost and the operation cost become high, and it is necessary to strictly restrict the measures and control for preventing the intrusion of external air, the heat treatment temperature is set to preferably 2900°C or lower, more preferably 2800°C or lower, still more preferably 2500°C or lower, and still more preferably 2400°C or lower. In the method of producing a pitch-based carbon fiber according to the disclosure, as compared with the production methods in the conventional techniques of Patent Literatures 2 and 3, and the like, it is possible to produce a pitch-based carbon fiber having a higher tensile modulus of elasticity as long as the heat treatment temperature in the graphitization process is the same as in the conventional production methods. In other words, in the method of producing a pitch-based carbon fiber according to the disclosure, as compared with the production methods in the conventional techniques of Patent Literatures 2 and 3, and the like, the temperature of the heat treatment in the graphitization process can be set to be lower in the case of producing pitch-based carbon fibers having the same level of tensile modulus of elasticity as in the conventional production methods.

By the above processes, a pitch-based carbon fiber can be obtained.

<Fiber-Reinforced Plastic>

A fiber-reinforced plastic according to the disclosure includes the pitch-based carbon fiber according to the disclosure.

A method of producing a fiber-reinforced plastic is not particularly limited, and a known production method may be used. For example, a fiber-reinforced plastic may be obtained by impregnating a pitch-based carbon fiber with a resin to prepare a prepreg, and subjecting the prepreg to molding processing such as a PCM (Pre-preg Compression Molding) method. For example, a fiber-reinforced plastic may be obtained by performing molding processing such as an SMC (Sheet Molding Compound) method or RTM (Resin Tranfer Molding) using a pitch-based carbon fiber and a resin.

Examples of the resin include a thermosetting resin and a thermoplastic resin.

Examples of the thermosetting resin include an epoxy resin, an unsaturated polyester resin, a vinyl ester resin, a bismaleimide resin, a phenolic resin, a cyanate resin, and polyimide.

Examples of the thermoplastic resin include nylon, polypropylene, polyphenylene sulfide, polyetherimide, polycarbonate, polyethylene terephthalate, and polyetheretherketone.

Since the fiber-reinforced plastic according to the disclosure includes the pitch-based carbon fiber according to the disclosure, the fiber-reinforced plastic is excellent in strength and can be suitably used for various use applications.

Examples

Hereinafter, the disclosure will be described more specifically with reference to Examples. However, the disclosure is not limited to these Examples.

<Production of Pitch-Based Carbon Fiber>

[Example 1]

Using anisotropic pitch (melting point: 302.1°C), the melt-spinning process was performed through the spinning nozzle (shape of discharge hole: rectangular, aspect ratio: 2.5, taper angle: 120°) shown in Figs. 9 and 10 to obtain a pitch-based carbon fiber precursor. The melting temperature (near the discharge hole) of the melted anisotropic pitch was 330°C and the viscosity was 40 Pa·s. The discharge rate of the anisotropic pitch was from 0.035 g/min to 0.090 g/min, the spinning pressure was from 2 MPa to 3 MPa, and the spinning speed was 350 m/min.

The obtained pitch-based carbon fiber precursor was subjected to the infusibilization process (under a mixed gas atmosphere of nitrogen, oxygen, and oxidizing gas), the carbonization process, and the graphitization process (heat treatment temperature: 2000°C) to obtain a pitch-based carbon fiber of Example 1.

[Example 2]

A pitch-based carbon fiber of Example 2 was obtained in the same manner as in Example 1, except that the anisotropic pitch was melted at a melting temperature of 325°C and the viscosity was set to 75 Pa·s.

[Example 3]

A pitch-based carbon fiber of Example 3 was obtained in the same manner as in Example 1, except that the aspect ratio of the spinning nozzle was changed to 5.0.

[Comparative Example 1]

A pitch-based carbon fiber of Comparative Example 1 was obtained in the same manner as in Example 1, except that the shape of the discharge hole of the spinning nozzle was a circle (aspect ratio: 1.0) and the discharge rate of the anisotropic pitch was set from 0.035 g/min to 0.040 g/min.

[Comparative Example 2]

A pitch-based carbon fiber of Comparative Example 2 was obtained in the same manner as in Example 1, except that the anisotropic pitch was melted at a melting temperature of 320°C and the viscosity was set to 120 Pa·s.

[Comparative Example 3]

A pitch-based carbon fiber of Comparative Example 3 was obtained in the same manner as in Example 1, except that the anisotropic pitch was melted at a melting temperature of 310°C and the viscosity was set to 150 Pa·s.

<Evaluation of Pitch-Based Carbon Fiber>

The shape of the cross-section, oblateness, defect number density, tensile strength, tensile modulus of elasticity, and the ratio of the area of the specific region of the pitch-based carbon fiber were measured in the following manner. The results are shown in Table 1. In Table 1, the "area ratio" means the ratio of the area of the specific region.

[Shape of Cross-Section and Oblateness]

The shape of the cross-section and oblateness of the pitch-based carbon fiber were obtained in accordance with JIS R 7606:2000 using a laser shape measurement apparatus by rotating the cross-section of the pitch-based carbon fiber every 10° in a measurement range of from 0° to 180° and measuring the shape of the outer periphery of the cross-section. As the laser shape measurement apparatus, "Laser Scan Micrometer LSM-500S" manufactured by Mitutoyo Corporation was used.

[Defect Number Density]

The defect number density ($\lambda_{av}$) was measured based on the Weibull plot by preparing from 30 to 50 pitch-based carbon fibers (single fibers) having a length of 25.0 mm and performing the tensile test in accordance with JIS R 7606:2000 as described above.

[Tensile Strength]

The average value of the tensile strengths obtained in the tensile test in the case of creating the Weibull plot was taken as the tensile strength of the pitch-based carbon fiber. Based on Comparative Example 1, the tensile strength improvement rate was calculated, and a pitch-based carbon fiber having a tensile strength improvement rate of 130% or more were regarded as acceptable.

[Tensile Modulus of Elasticity]

The average value of the tensile modulus of elasticity obtained in the tensile test in the case of creating the Weibull plot was taken as the tensile strength of the pitch-based carbon fiber.

[Ratio of Area of Specific Region]

A randomly selected cross-section of the pitch-based carbon fiber was observed in a direction perpendicular to the cross-section using an SEM (Scanning Electron Microscope) to acquire an SEM image. As the SEM, "JSM-6500F" manufactured by JEOL Ltd. was used.

As acquisition conditions of the SEM image, the magnification was set to 10000 times, and the acceleration voltage was set to 5 kV

The SEM image was analyzed using image processing software "ImageJ (vl. 52)". Specifically, the SEM image was subjected to binarization processing to acquire a binarized image of the cross-section, and the binarized image was subjected to editing of drawing a black portion of the binarized image as a line segment to acquire an edited image of the cross-section. For the edited image, linearity of each line segment in the cross-section was evaluated by fractal dimension analysis, and a line segment of D = 1.2 or less was specified. The line segment of D = 1.2 or less was defined as a "graphene sheet".

A line segment that gives the maximum length of the contour of the cross-section in the edited image (that is, the maximum value of a straight line connecting any two points of the contour, which is the diameter in a case in which the cross-section is a circle, and the major axis in a case in which the cross-section is an ellipse) was defined as a "boundary surface".

The edited image was analyzed by the program described in "Python (v3)" (open source) to determine an orientation angle of each graphene sheet (line segment of D = 1.2 or less) with respect to the boundary surface over the entire cross-section. At this time, an angle at an intersection of a straight line including the boundary surface and a straight line including the graphene sheet was defined as an orientation angle.

The region (specific region) occupied by the graphene sheet oriented at an orientation angle of from 60° to 120° (a line segment having D = 1.2 or less and an orientation angle of from 0° to 120°) was indicated in black using "ImageJ (vl. 52)" to identify the specific region occupied in the cross-section. The area of the specific region and the area of the cross-section were determined using "ImageJ (vl. 52)". The ratio of the area of the specific region was determined by dividing the area of the specific region by the area of the cross-section.

For the same cross-section of the pitch-based carbon fiber as described above, the same measurement was performed five times, and the average value of the ratios of the areas of the specific regions obtained in the five measurements was taken as the ratio of the area of the specific region of the pitch-based carbon fiber.

[Table 1]

| | Melt-spinning condition | | Spinning nozzle | Physical properties of pitch-based carbon fiber | | | | | | | |
|---|---|---|---|---|---|---|---|---|---|---|---|
| | Melting temperature (°C) | Viscosity (Pa.s) | Aspect ratio | Structure | Oblateness | Tensile strength (MPa) | Tensile strength improvement rate | Tensile modulus of elasticity (GPa) | Defect number density (number/m) | Area ratio (%) |
| Example 1 | 330 | 40 | 2.5 | Flat radial | 0.083 | 3633 | 145 | 463 | 24 | 66.0 |
| Example 2 | 325 | 75 | 2.5 | Flat radial | 0.129 | 3600 | 144 | 450 | 24 | 65.0 |
| Example 3 | 330 | 40 | 5.0 | Flat radial | 0.140 | 4011 | 160 | 441 | 7 | 80.0 |
| Comparative Example 1 | 330 | 40 | 1.0 | Simple radial | 0.081 | 2500 | 0 | 471 | 85 | 0.0 |
| Comparative Example 2 | 320 | 120 | 2.5 | Flat radial | 0.165 | 2837 | 113 | 368 | 66 | 43.0 |
| Comparative Example 3 | 310 | 150 | 2.5 | Flat radial | 0.193 | 3182 | 127 | 340 | 43 | 20.0 |

The pitch-based carbon fibers of Examples 1 to 3 had a small defect number density and were excellent in tensile strength as shown in Table 1. In particular, the pitch-based carbon fiber of Example 3 had a particularly small defect number density and a tensile strength exceeding 4000 MPa.

On the other hand, in Comparative Example 1, since the spinning nozzle having a discharge hole with an aspect ratio of 1 was used, the pitch-based carbon fiber had a simple radial structure. Therefore, the influence of thermal shrinkage during the graphitization process was increased, the defect number density was high, and the tensile strength was low.

In Comparative Example 2, since melt-spinning was performed using anisotropic pitch having a high viscosity of 120 Pa·s, the defect number density was large and the tensile strength was low. In Comparative Example 2, the tensile modulus of elasticity also tended to decrease.

In Comparative Example 3, since melt-spinning was performed using anisotropic pitch having a high viscosity of 150 Pa·s, the defect number density was large and the tensile strength was low. In Comparative Example 3, the tensile modulus of elasticity also tended to decrease.

The entire contents of the disclosures by Japanese Patent Application No. 2021-093111 are incorporated herein by reference.

All the literature, patent application, and technical standards cited herein are also herein incorporated to the same extent as provided for specifically and severally with respect to an individual literature, patent application, and technical standard to the effect that the same should be so incorporated by reference.

DESCRIPTION OF REFERENCE NUMERALS

| 10 | Graphene sheet |
|---|---|
| 12 | Straight line including graphene sheet |
| 30, 32 | Boundary surface |
| 34 | Center |
| 36 | Straight line including boundary surface |
| 100, 102, 104 | Pitch-based carbon fiber |
| 50 | Discharge hole of spinning nozzle |
| 70 | Introduction unit |
| 90 | Tapered portion |
| α | Orientation angle |
| L | Land length |
| θ | Taper angle |
| a | Short side of discharge hole |
| b | Long side of discharge hole |
| 200 | Spinning nozzle |

Claims

1. A pitch-based carbon fiber having a defect number density of 40/m or less, a shape of a cross-section of the pitch-based carbon fiber perpendicular to a longitudinal direction being a circle or an ellipse having oblateness of 0.25 or less, and the pitch-based carbon fiber having a boundary surface in a diametrical direction of the circular cross-section or in a major axis direction of the elliptical cross-section.

2. The pitch-based carbon fiber according to claim 1, wherein a ratio of an area of a region occupied by a graphene sheet oriented at an orientation angle of from 60° to 120° with respect to the boundary surface is 60% or more with respect to an area of the cross-section.

3. The pitch-based carbon fiber according to claim 2, wherein the shape of the cross-section is a circle or an ellipse having oblateness of 0.2 or less.

4. The pitch-based carbon fiber according to any one of claims 1 to 3, wherein the defect number density is 30/m or less.

5. The pitch-based carbon fiber according to any one of claims 1 to 4, having a tensile modulus of elasticity is 400 GPa or more.

6.  The pitch-based carbon fiber according to claim 5, wherein the tensile modulus of elasticity is 440 GPa or more.

7.  A method of producing a pitch-based carbon fiber, the method comprising:

    a melt-spinning process of discharging melted anisotropic pitch from a spinning nozzle to perform spinning, wherein a ratio of a length of a long side of a circumscribing rectangle circumscribing a shape of a discharge hole of the spinning nozzle with respect to a length of a short side of the circumscribing rectangle is more than 1, and
    a viscosity of the melted anisotropic pitch is from 20 Pa·s to 80 Pa·s.

8.  The method of producing a pitch-based carbon fiber according to claim 7, wherein the ratio is from 1.5 to 10.0.

9.  The method of producing a pitch-based carbon fiber according to claims 7 or 8, wherein the shape of the discharge hole is a rectangle or an ellipse.

10. The method of producing a pitch-based carbon fiber according to any one of claims 7 to 9, wherein a viscosity of the anisotropic pitch is from 30 Pa·s to 60 Pa·s.

11. The method of producing a pitch-based carbon fiber according to any one of claims 7 to 10, wherein a spinning speed in the melt-spinning process is from 200 m/min to 500 m/min.

12. The method of producing a pitch-based carbon fiber according to any one of claims 7 to 11, further comprising:

    a graphitization process of subjecting a carbonized pitch-based carbon fiber precursor to a heat treatment to graphitize the carbonized pitch-based carbon fiber precursor, after the melt-spinning process,
    wherein a temperature of the heat treatment in the graphitization process is from 2000°C to 2900°C.

13. A fiber-reinforced plastic, comprising the pitch-based carbon fiber according to any one of claims 1 to 6.

FIG.1

FIG.2

FIG.3

FIG.4

FIG.5

FIG.6

FIG.7

FIG.8

FIG.9

FIG.10

## INTERNATIONAL SEARCH REPORT

| | International application No. |
|---|---|
| | **PCT/JP2022/022551** |

### A. CLASSIFICATION OF SUBJECT MATTER

***D01F 9/14***(2006.01)i; ***D01F 9/145***(2006.01)i
FI:   D01F9/14 511; D01F9/145

According to International Patent Classification (IPC) or to both national classification and IPC

### B. FIELDS SEARCHED

Minimum documentation searched (classification system followed by classification symbols)

D01D1/00-13/02; D01F9/08-9/32

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 1-282316 A (TORAY INDUSTRIES, INC.) 14 November 1989 (1989-11-14) claims, p. 1, right column, line 6, p. 2, upper left column, lines 6-8, p. 5, upper right column, line 7 to p. 6, upper left column, line 12, example 2, fig. 1, 5 | 1-6, 13 |
| Y | | 7-12 |
| X | JP 61-275426 A (MITSUI COKES KOGYO KK) 05 December 1986 (1986-12-05) claims, p. 3, lower right column, lines 1-17, p. 4, upper right column, line 15 to lower right column, line 16, example 1, fig. 2-1 | 7-10, 12 |
| Y | | 11 |
| Y | JP 10-298829 A (NIPPON OIL CO., LTD.) 10 November 1998 (1998-11-10) claims, paragraphs [0010], [0014], example 1 | 7-12 |
| A | JP 11-29830 A (AGENCY OF INDUSTRIAL SCIENCE & TECHNOLOGY) 02 February 1999 (1999-02-02) paragraph [0013] | 1-13 |
| A | WO 2009/125832 A1 (TORAY INDUSTRIES, INC.) 15 October 2009 (2009-10-15) paragraphs [0088]-[0094] | 1-13 |

☑ Further documents are listed in the continuation of Box C.       ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 July 2022** | **09 August 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/JP2022/022551** |

**C.     DOCUMENTS CONSIDERED TO BE RELEVANT**

| Category* | Citation of document, with indication, where appropriate, of the relevant passages | Relevant to claim No. |
| --- | --- | --- |
| A | JP 61-6316 A (TEIJIN LTD.) 13 January 1986 (1986-01-13)<br>entire text, all drawings | 1-13 |

Form PCT/ISA/210 (second sheet) (January 2015)

## INTERNATIONAL SEARCH REPORT
### Information on patent family members

International application No.

**PCT/JP2022/022551**

| Patent document cited in search report | | | Publication date (day/month/year) | Patent family member(s) | | | Publication date (day/month/year) |
|---|---|---|---|---|---|---|---|
| JP | 1-282316 | A | 14 November 1989 | (Family: none) | | | |
| JP | 61-275426 | A | 05 December 1986 | (Family: none) | | | |
| JP | 10-298829 | A | 10 November 1998 | US | 5968435 | A | |
| | | | | claims, 5th row, lines 27-37, example 1 | | | |
| JP | 11-29830 | A | 02 February 1999 | (Family: none) | | | |
| WO | 2009/125832 | A1 | 15 October 2009 | US | 2011/0038788 | A1 | |
| | | | | paragraphs [0101]-[0107] | | | |
| | | | | EP | 2264232 | A1 | |
| | | | | CA | 2711285 | A1 | |
| | | | | CN | 101932760 | A | |
| | | | | KR | 10-2010-0131453 | A | |
| | | | | MX | 2010010887 | A | |
| | | | | EA | 201071185 | A1 | |
| | | | | BR | PI0905945 | A2 | |
| | | | | TW | 200951254 | A | |
| | | | | ES | 2405581 | T3 | |
| | | | | PT | 2264232 | E | |
| JP | 61-6316 | A | 13 January 1986 | (Family: none) | | | |

Form PCT/ISA/210 (patent family annex) (January 2015)

**EP 4 350 058 A1**

## REFERENCES CITED IN THE DESCRIPTION

**Patent documents cited in the description**

- JP S60155714 A
- JP S61006316 A
- JP H529689 B
- JP 2021093111 A